# EUROPÄISCHE PATENTSCHRIFT

(11) **EP 1 191 211 B1**
(45) Veröffentlichungstag und Bekanntmachung des Hinweises auf die Patenterteilung: **11.08.2004**
(21) Anmeldenummer: 01890271.8
(22) Anmeldetag: 20.09.2001
(51) Int. Cl.: F02B 31/08, F02D 9/14, F02D 13/02

(54) **Verfahren zum Betreiben einer fremdgezündeten Brennkraftmaschine**
Method for operating an internal combustion engine
Méthode de fonctionnement d'un moteur à combustion interne

(30) Priorität: 21.09.2000 AT 6962000 U; 03.10.2000 AT 7262000 U
(43) Veröffentlichungstag der Anmeldung: 27.03.2002
(73) Patentinhaber: AVL List GmbH, 8020 Graz (AT)
(72) Erfinder: Kapus, Paul, Dr., 8111 Judendorf (AT)
(74) Vertreter: Babeluk, Michael, Dipl.-Ing.

(56) Entgegenhaltungen:
- EP-A- 0 854 273
- EP-B- 0 764 773
- AT-U- 3 138
- US-A- 4 715 333
- US-A- 5 181 485
- US-A- 5 233 948
- US-A- 5 680 836
- US-A- 5 803 045
- US-A- 5 957 096
- PATENT ABSTRACTS OF JAPAN vol. 009, no. 100 (M-376), 2. Mai 1985 (1985-05-02) -& JP 59 224466 A (TOYOTA MOTOR CORP), 17. Dezember 1984 (1984-12-17)
- STEIN R A ET AL: "DUAL EQUAL VCT - A VARIABLE CAMSHAFT TIMING STRATEGY FOR IMPROVED FUEL ECONOMY AND EMISSIONS" SAE TECHNICAL PAPER SERIES, SOCIETY OF AUTOMOTIVE ENGINEERS, WARRENDALE, PA, US, 1995, Seiten 1627-1639, XP008006453 ISSN: 0148-7191

## Beschreibung

Die Erfindung betrifft ein Verfahren zum Betreiben einer fremdgezündeten Brennkraftmaschine, welche zumindest einen Zylinderkopf mit einer ersten und einer zweiten Nockenwelle zur Betätigung von im Zylinderkopf angeordneten Ein- und Auslassventilen aufweist, wobei zumindest eine Nockenwelle über ein Zugmittelgetriebe von einer Kurbelwelle angetrieben wird, und welche pro Zylinder zumindest zwei bis zu den Einassöffnungen in den Brennraum getrennte Einlasskanäle aufweist, sowie eine Viertakt-Brennkraftmaschine zur Durchführung des Verfahrens.

Ständig steigende Anforderungen an den Kraftstoffverbrauch und die Reduktion der Abgasemissionen, insbesondere der Kohlenwasserstoffe und der Stickoxide, erfordern den Einsatz neuer Technologien im Bereich der Verbrennungskraftmaschinen.

Ein wesentlicher Grund für den gegenüber zum Beispiel Dieselmotoren höheren spezifischen Kraftstoffverbrauch einer fremdgezündeten Brennkraftmaschine liegt in der Betriebsweise mit vorgemischtem homogenem Kraftstoff-Luftgemisch. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 25% geschätzt werden. Ein Teil dieses Verbesserungspotentials kann genutzt werden, wenn im Teillastbereich eine Verringerung der Drosselung möglich wird.

Folgende Möglichkeiten zur Verringerung der Drosselverluste bei Ottomotoren sind bekannt:
*A) Magerbetrieb*
   a) homogen
   b) geschichtet (Zündkerze fett, Zylinderwand mager)
*B) Abgasrückführung*
*C) Frühes Schließen des Einlassventiles (variabler Ventilhub)*
*D) Spätes Schließen des Einlassventiles ("Miller-Cycle")*

Im Folgenden werden diese Verfahren bzw. deren Vor- und Nachteile beschrieben:

### A) Magerbetrieb:

a) homogen: bei gegebener Kraftstoffmenge ist eine Entdrosselung durch Erhöhung der Luftmenge (Abmagerung des Gemisches) möglich. Nun wird aber durch Abmagerung die Verbrennung verlangsamt, was zu einem niedrigeren thermodynamischen Wirkungsgrad führt. Um die Entdrosselung zu erhöhen sind also Maßnahmen erforderlich, die die Abmagerungsfähigkeit verbessern. Für die Einhaltung der Emissionsgrenzwerte ist für diesen Betrieb eine spezielle Abgasnachbehandlung für Stickoxide (DENOX-Katalysator) nötig.
b) geschichtet: der Verlangsamung der Verbrennung kann auch durch Schichtung des Gemisches im Brennraum entgegengewirkt werden. Dabei wird versucht, in der Umgebung der Zündkerze zum Zeitpunkt der Entflammung ein fetteres Gemisch als im restlichen Brennraum zu erzielen. Bei Einspritzung ins Saugrohr ist es wegen des homogenisierenden Effektes der Ladungsbewegung nicht möglich, eine nennenswerte Schichtung zum Zündzeitpunkt aufrechtzuerhalten. Bei direkter Einspritzung des Kraftstoffes in den Brennraum kann bei Einspritzung kurz vor der Entflammung eine stabile, reproduzierbare Schichtung und damit ein ungedrosselter Betrieb erzielt werden. Auch bei diesem Verfahren muss zur Einhaltung der Emissionsgrenzwerte im Fahrzeug ein DENOX-Kat verwendet werden. Zusätzlich muß bei der kurzen zur Verfügung stehenden Zeit zur Gemischbildung besonderes Augenmerk auf Rußbildung bzw. deren Vermeidung geachtet werden. Der technische Aufwand zur Realisierung einer direkten Einspritzung ist deutlich höher als bei einer Saugrohreinspritzung.

### B) Abgasrückführung (AGR):

Durch Rückführung von inertem Abgas ist ebenfalls, so wie beim Magerbetrieb, eine Entdrosselung möglich. Da das rückgeführte Abgas das Luft-Kraftstoffverhältnis nicht ändert, ist ein stöchiometrischer Betrieb und damit eine konventionelle Abgasnachbehandlung mit Dreiwegekatalysator möglich. Auch bei AGR-Zugabe verlangsamt sich die Verbrennung deutlich. Es treten die gleichen thermodynamischen Verluste wie bei Magerbetrieb auf. Durch selektive Zugabe des Abgases in der Nähe der Zylinderwand ist eine zusätzliche leichte Schichtung von Frischgas in der Nähe der Zylindermitte und Abgas an der Zylinderwand möglich. Eine Brennkraftmaschine mit mindestens zwei Einlassventilen bietet die Möglichkeit, dem Brennraum über getrennte Einlasskanäle unterschiedliche Gemischzusammensetzungen zuzuführen. Die Strömung im Zylinderraum kann mit Hilfe der Gestaltung der Einlassorgane des Motors derart beeinflusst werden, dass sich zum Zündzeitpunkt ein in der gewünschten Weise geschichtetes Gemisch im Zylinder befindet. Hierbei ist es besonders vorteilhaft, wenn sich der fettere (bei Luftzufuhr) bzw. der reinere (Bei AGR) Gemischanteil in Zylindermitte im Bereich einer zentral angeordneten Zündkerze befindet, während zur Zylinderwand hin eine Abmagerung des Gemisches bzw. eine Zunahme der Abgaskonzentration vorzufinden ist.

### C) Frühes Schließen des Einlassventiles:

Durch Verwendung eines vollvariablen Ventilhubes ist es möglich, das Einlassventil bei ungeändertem Öffnungszeitpunkt deutlich früher zu schließen. Dadurch saugt der Motor nur so viel Luft (gegen geringeren Unterdruck) an, wie er für stöchiometrische Verbrennung benötigt. Die Drosselverluste sinken deutlich. Die Nachteile dieses Verfahrens sind der hohe technische Aufwand für die Realisierung des vollvariablen Ventilhubes und die Abkühlung des Kraftstoffes bei Expansion gegen das geschlossene Einlassventil. Da das Einlassventil sehr früh zumacht, ergeben sich bei der Abwärtsbewegung des Kolbens Ladungstemperaturen unter dem Gefrierpunkt.

### D) Spätes Schließen des Einlassventiles:

Eine weitere Alternative zur Entdrosselung ist das Ausschieben von gegen geringem Unterdruck zuviel angesaugter Luft. Dies geschieht durch sehr spätes Schließen des Einlassventiles, wenn der Kolben schon deutlich nach oben geht (Kompression). Diese bekannte Variante des sogenannten "Miller-Cycle" wird üblicherweise bei Motoren mit zwei oben liegenden Nockenwellen (DOHC-Motoren) und zwei, im wesentlichen symmetrisch angeordneten Einlasskanälen pro Zylinder, verwendet. Durch die bei konventionellen Motoren mit symmetrischen Einlasskanälen erzeugte "Tumble"-Ladungsbewegung kommt es allerdings dazu, dass bei extrem spätem Schließen des Einlassventiles auch Kraftstoff, der vor oder während der Ansaugphase eingespritzt wird, wieder ausgeschoben wird. Durch die "Tumble"-Ladungsbewegung wird eine Gemischwalze 90° zur Zylinderachse aufgebaut. Es bildet sich eine Aufwärtsströmung auf der Rückseite des Zylinders in Richtung Einlassventil. Dadurch kommt es zur Zylindermissverteilung bzw. zu nicht reproduzierbarer Gemischzusammensetzung.

Es sind zahlreiche Brennkraftmaschinen mit externer oder interner Abgasrückführung bekannt. Es sind auch Brennkraftmaschinen bekannt, bei denen der Einlassschluss verändert bzw. nach spät verstellt wird.

Aus der EP 0 764 773 A2 ist eine Brennkraftmaschine bekannt, bei der die Abgasrückführung in den Einlasssammler erfolgt. Dies hat allerdings den Nachteil, dass durch den Einlasssammler ein relativ großes Totvolumen gebildet wird. Durch die dämpfende Wirkung des Totvolumens ist die Reaktionszeit des Abgasrückführsystems relativ langsam, wodurch nur relativ niedrige Abgasrückführraten im dynamischen Fahrbetrieb aus Fahrbarkeitsgründen möglich sind.

Andererseits ist aus der EP 0 764 773 A2 ein weiteres Abgasrückführsystem bekannt, bei dem die Abgasrückführung aus dem Auslasssystem direkt in einen von zwei Einlasskanälen pro Zylinder erfolgt. Bei dieser Ausführung können zwar große Totvolumina vermieden werden, allerdings ist eine gleichmäßige Rückführung des Abgases zu den einzelnen Zylindern nicht mehr gewährleistet.

Aus der AT 2 434 U1 ist eine fremdgezündete Brennkraftmaschine mit mehreren Zylindern und einer Einrichtung zur Ladungsverdünnung für Luft oder rückgeführtes Abgas bekannt, welche eine für alle Zylinder eine Reihe gemeinsame Verteilerleiste aufweist, in welche die Zuführleitung einmündet und welche über zumindest einen Verteilerkanal pro Zylinder mit einem Einlasskanal strömungsverbunden ist. Dadurch wird eine für alle Zylinder gleiche und hohe Ladungsverdünnung ermöglicht, wobei bei Abgasrückführung die Gasdynamik des rückgeführten Abgases nur unwesentlich gedämpft wird. Die Brennkraftmaschine weist dabei pro Zylinder einen Tangentialkanal zur Erzeugung einer Rotation der Zylinderladung um die Zylinderachse und einen Neutralkanal, welcher weder eine ausgeprägte Drallströmung noch eine Tumbleströmung hervorruft. Derartige Brennkraftmaschinen tolerieren hohe Abgasrückführmengen.

Auch aus der AT 402 535 B ist eine Brennkraftmaschine mit einem Neutralkanal und einem Tangentialkanal pro Zylinder bekannt, wobei Kraftstoff in beide Einlasskanäle über eine zwischen den Einlasskanälen angeordnete Einspritzeinrichtung eingebracht wird. Die beiden Einlasskanäle münden dabei in vordefinierten Winkeln in den Brennraum, so dass einerseits bei Teillast ein hoher Drall der Ladung erreicht wird ohne bei Volllast die Ladungseinströmung infolge schlechterer Durchflusswerte zu beeinträchtigen.

Die EP 0 764 773 A1 offenbart eine ähnliche Brennkraftmaschine mit jeweils in einen Zylinder mündenden Neutral- und Tangentialkanälen, wobei die Kraftstoffeinspritzung in den durch eine Drosseleinrichtung steuerbaren Neutralkanal erfolgt. Die Drosseleinrichtung ermöglicht im geschlossenen Zustand einen definierten Mindestdurchfluss. Mit dieser Ausbildung kann eine stabile radiale Gemischschichtung erreicht werden. Weiters wird in der EP 0 764 773 A1 eine externe Abgasrückführung zwischen Auslasskanal und dem Tangentialkanal gezeigt.

Zur Erzielung einer internen Abgasrückführung sind verschiedene Verfahren bekannt. Die DE 1 222 735 B beschreibt eine Brennkraftmaschine, bei der der Öffnungszeitpunkt des Einlassventiles weit in die Auslassperiode verschoben wird.

Die DE 1 401 228 B zeigt einen Dieselmotor, bei dem Verbrennungsgase in das Ansaugsystem durch Veränderung der Steuerzeit der Auslass- und Einlassventile strömen.

Bei der DE 27 10 189 A1 wird eine interne Abgasrückführung durch verzögertes Schließen des Auslassventiles mittels Lagerbockhöhenverstellung des Kipphebellagers erreicht.

Die DE 21 25 368 A zeigt einen Viertaktmotor, bei dem das Auslassventil während des Ansaugtaktes kurz vor dem maximalen Einlassventilhub mittels eines Zusatznockens geöffnet wird.

Die DE 26 38 651 A offenbart eine Brennkraftmaschine, bei der das Auslassventil vor dem Schließen des Ansaugventiles und bei Stellung des Kolbens kurz vor Erreichen des unteren Totpunktes nochmals durch einen Zusatznocken geöffnet wird.

Die AT 003 134 U1 beschreibt ein Verfahren zum Betreiben einer fremdgezündeten Viertakt-Brennkraftmaschine, bei der Ein- und Auslassventile über eine einzige gemeinsame Nockenwelle betätigt werden. Um einen drosselarmen Teillastbetrieb auf möglichst einfache Weise zu erzielen, sieht das bekannte Verfahren eine Phasenverstellung der Nockenwelle bei Teillast vor, wobei sowohl die Einlasssteuerzeit, als auch die Auslasssteuerzeit um einen Kurbelwellenwinkel von 30° bis 100° nach Spät verschoben wird.

In der US 5,161,497 A wird vorgeschlagen, die Steuerzeit von Ein- und Auslassventilen unabhängig voneinander phasenzuverstellen, um Pumpverluste während des Kompressionstaktes zu verringern und um die Emissionen zu vermindern, sowie um die Leistung zu erhöhen.

Aus der US 4,805,566 A, der US 4,974,560 A, der US 4,716,864 A, der US 4,939,370 A, der US 5,181,485 A und der US 4,787,345 A sind Brennkraftmaschinen mit zwei oben liegenden Nockenwellen bekannt, wobei die Nockenwellen relativ zueinander durch einen Phasenversteller verdrehbar sind. Dadurch kann beispielsweise die Überschneidung in der Öffnungszeit zwischen Ein- und Auslassventilen variiert werden.

Es sind auch Brennkraftmaschinen mit zwei oben liegenden Nockenwellen bekannt, bei denen sowohl die eine als auch die andere Nockenwelle relativ zur Kurbelwelle phasenverschiebbar ist. Dies geschieht über zwei unabhängig voneinander agierende Phasenversteller. Die US 5,184,581 A zeigt beispielsweise eine derartige Brennkraftmaschine. Derartige Konstruktionen sind allerdings relativ aufwendig, benötigen viel Einbauraum und erfordern umfangreiche steuerungstechnische Maßnahmen.

Neben der Verdrehung der Nockenwelle bezüglich eines Antriebes sind auch andere Phasenversteller bekannt. Bei der US 4,716,864 A oder der US 4,715,333 A erfolgt die Phasenverstellung durch eine Zugmittelspanneinrichtung. Die Druckschriften US 4,747,325 A, US 5,680,836 A und US 5,680,837 A beschreiben durch ein Planetengetriebe gebildete Phasenversteller.

Aufgabe der Erfindung ist es, bei einer fremdgezündeten Brennkraftmaschine mit zwei obenliegenden Nockenwellen auf möglichst einfache Weise einen drosselarmen Teillastbetrieb zu ermöglichen.

Erfindungsgemäß wird dies dadurch erreicht, dass bei Teillast einer der beiden Einlasskanäle durch eine Drosseleinrichtung mit vordefinierten Leckageöffnungen geschlossen und der andere Einlasskanal geöffnet wird oder bleibt und die beiden phasengleich umlaufenden Nockenwellen synchron bezüglich der Kurbelwelle phasenverstellt werden, so dass sowohl die Einlasssteuerzeit, als auch die Auslasssteuerzeit um einen Kurbelwinkel von etwa 30° bis 100°, vorzugsweise etwa 40° bis 80°, nach Spät verschoben wird. Dies ist insbesondere dadurch möglich, dass die Steuerzeit zumindest einer Nockenwelle bezüglich der Kurbelwelle phasenverstellbar ist, und dass beide Nockenwellen phasengleich miteinander gekoppelt und synchron über einen einzigen Phasenversteller phasenverstellbar gegenüber der Kurbelwelle sind, wobei der Phasenversteller im Antriebsstrang zwischen Kurbelwelle und der Nockenwelle angeordnet ist, und dass im Zylinderkopf zumindest zwei bis zu den Einlassöffnungen in den Brennraum getrennte Einlasskanäle vorgesehen sind, wobei ein Einlasskanal durch eine eine definierte Leckageöffnung aufweisende Drosseleinrichtung absperrbar ist. Die Drosseleinrichtung ist hydraulisch stromabwärts eines Kraftstoff in beide Einlasskanäle einspritzenden Einspritzventils angeordnet.

Durch die völlig getrennt ausgeführten Einlasskanäle wird bei Abschaltung des zweiten Einlasskanals ein starker Drall im Brennraum generiert, der die Verbrennung begünstigt. Besonders vorteilhaft ist es dabei, wenn die Drosseleinrichtung hydraulisch stromabwärts der Mündung des Einspritzventils angeordnet ist. Auf diese Weise wird ein Verblasen des Kraftstoffstrahles und damit eine Wandbenetzung der Wand des zweiten Einlasskanals vermieden. Da die Drosseleinrichtung unmittelbar beim Einspritzventil angeordnet ist, ist kein eigener Leckagekanal erforderlich.

Da Ein- und Auslasssteuerzeit synchron nach Spät verschoben werden, wird vermieden, dass sich in der frühen Ansaugphase nahe dem oberen Totpunkt ein Ladungswechselverluste bewirkender Unterdruck einstellt, wenn die Einlasssteuerzeit nach Spät verstellt wird. Gleichzeitig lässt sich durch das verspätete Schließen der Auslassventile eine interne Abgasrückführung in den Zylinderraum erzielen.

Besonders günstig ist es, wenn bei Spätverstellung der Einlasssteuerzeit der Einlassschluss bei etwa 80° bis 150°, vorzugsweise bei etwa 90° bis 140° nach dem auf dem Ladungswechsel folgenden unteren Totpunkt erfolgt.

Es ist von DOHC-Motoren bekannt, dass mit verspätetem Einlassschluss ein entdrosselter Betrieb erreicht werden kann ("Miller-Cycle"). Dabei besteht allerdings die Gefahr, dass durch den verspäteten Schließpunkt der Einlassventile ein Teil des Kraftstoffes wieder in das Ansaugrohr geschoben wird. Dieses Problem tritt vor allem bei tumbleerzeugenden Einlasskanälen, insbesondere mit zwei symmetrisch angeordneten Einlasskanälen pro Zylinder, auf. Durch eine asymmetrische Einlasskanalanordnung, welche eine asymmetrische Einlassströmung generiert, kann dieser Nachteil vermieden werden.

Die Steuerzeitverstellung wird im Rahmen der vorliegenden Erfindung in einer Ausführungsvariante dadurch bewirkt, dass die Phasenverstellung der Nockenwelle durch Verdrehen einer Nockenwelle in Bezug auf ein Abtriebsrad des Zugmittelgetriebes erfolgt. Dabei ist es besonders vorteilhaft, wenn der Phasenversteller im Bereich zwischen dem Abtriebsrad des ersten Zugmittelgetriebes und der ersten Nockenwelle angeordnet ist.

In einer zweiten erfindungsgemäßen Ausführungsvariante erfolgt die Steuerzeitverstellung dadurch, dass die Phasenverstellung durch Verdrehen eines Zugmittelantriebsrades des Zugmittelbetriebes in Bezug auf die Kurbelwelle erfolgt. Dies hat den Vorteil, dass kein zusätzlicher Bauraum im Zylinderkopf beansprucht wird. Dazu kann vorgesehen sein, dass der Phasenversteller im Bereich zwischen der Kurbelwelle und dem Antriebsrad des ersten Zugmittelgetriebes angeordnet ist.

Eine weitere Möglichkeit der Steuerzeitverstellung besteht in der Veränderung der Zugmittelspannung des ersten Zugmittelgetriebes. Zur Veränderung der Zugmittelspannung kann dabei vorgesehen sein, dass der Phasenversteller als Spanneinrichtung für das Zugmittel des Zugmittelgetriebes ausgebildet ist. In diesem Falle kann in einer äußerst einfachen Ausführungsvariante vorgesehen sein, dass zum Antrieb der beiden Nockenwellen durch die Kurbelwelle nur ein einziges Zugmittelgetriebe vorgesehen ist, wobei die beiden Nockenwellen durch das selbe Zugmittel des ersten Zugmittelgetriebes angetrieben sind. Eine eigene Transmission zwischen den beiden Nockenwellen kann dabei eingespart werden. Alternativ dazu kann freilich vorgesehen sein, dass die beiden Nockenwellen durch ein zweites Zugmittelgetriebe oder ein Zahnradgetriebe miteinander verbunden sind.

Gegenüber einem vollvariablen Ventilhub, beispielsweise mittels elektrischer oder hydraulischer Ventilbetätigung, mit welchem ebenfalls ein drosselfreier Teillastbetrieb möglich wäre, hat die gemeinsame Steuerzeitverstellung für Ein- und Auslassventile den Vorteil eines äußerst geringen Herstellungs- und Steueraufwandes. Auch im Vergleich zur Steuerzeitspätverstellung bei DOHC-Motoren hat das erfindungsgemäße Verfahren den Vorteil, dass eine Verbrauchsverbesserung mit viel geringerem Aufwand verwirklicht werden kann.

Durch das erfindungsgemäße Verfahren lässt sich somit eine deutliche Kraftstoffersparnis erzielen. Der späte Auslassschluss am Beginn des Ansaugtaktes ermöglicht eine interne Abgasrückführung, wodurch der Aufwand für eine externe Abgasrückführung zumeist eingespart werden kann.

Die Erfindung wird im Folgenden anhand der Figuren näher erläutert. Es zeigen
- Fig. 1: ein Ventilhub H - Kurbelwinkel KW - Diagramm,
- Fig. 2: eine Nockenwellenanordnung einer erfindungsgemäßen Brennkraftmaschine in einer ersten Ausführungsvariante,
- Fig. 3: eine Nockenwellenanordnung einer erfindungsgemäßen Brennkraftmaschine in einer zweiten Ausführungsvariante in Draufsicht,
- Fig. 4: einen Nockenwellenantrieb für die in den Fig. 2 und 3 dargestellte Nockenwellenanordnung,
- Fig. 5,: 6 und 7 Nockenwellenantriebe in weiteren Ausführungsvarianten der Erfindung,
- Fig. 8: die Einlasskanäle eines Zylinders in einer Schrägansicht,
- Fig. 9: die Einlasskanäle in einer Draufsicht,
- Fig. 10: das Steuerorgan aus Fig. 8 und 9 in geöffnetem Zustand,
- Fig. 11: dieses Steuerorgan in geschlossenem Zustand und
- Fig. 12: einen Einlasskanal dieser Brennkraftmaschine in einem Schnitt gemäß der Linie XII-XII in Fig. 9.

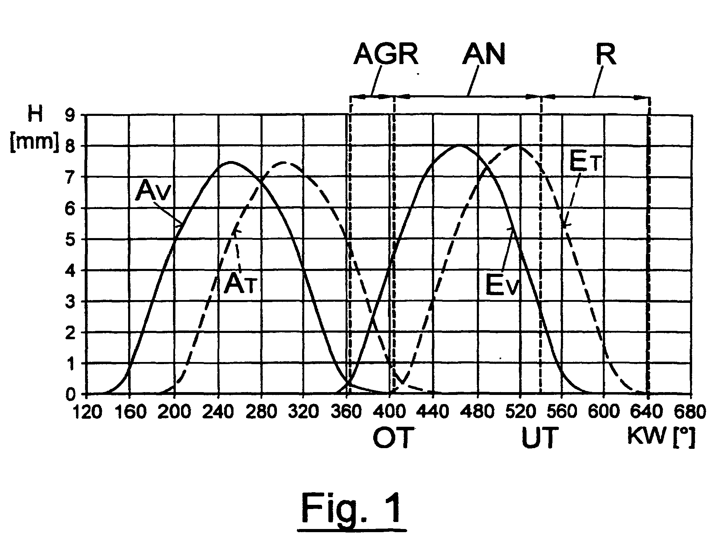

In dem in der Fig. 1 dargestellten Diagramm ist der Ventilhub H über der Kurbelstellung KW in Grad Kurbelwinkel für Einlassventile und Auslassventile, jeweils für Vollastbetrieb und Teillastbetrieb aufgetragen. Bezugszeichen E_{T} bezeichnet den Ventilhub H der Einlassventile bei Teillast, E_{V} den Ventilhub der Einlassventile bei Volllast. Der Ventilhub H der Auslassventile für Teillast bzw. für Volllast ist mit A_{T} bzw. A_{V} bezeichnet. Deutlich ist zu erkennen, dass bei Teillast die Steuerzeiten der Einlassventile und der Auslassventile nach Spät verstellt werden, wobei die Spätverstellung der Einlaßnockenwelle etwa 50° beträgt, so dass der Einlassschluss bei 90° bis 140° nach dem unteren Totpunkt UT nach dem Ladungswechsel liegt. Die Steuerzeitverstellung des Auslassventilhubes erfolgt synchron mit der Verstellung des Einlassventilhubes nach Spät. Durch die Verschiebung der Einlasssteuerzeit nach Spät wird eine Entdrosselung bewirkt, so dass während der Ausschiebphase R die überflüssige Luft im Brennraum wieder in das Saugrohr gegen Umgebungsdruck rückgeblasen wird.

Da auch die Auslasssteuerzeit synchron mit der Einlasssteuerzeit nach Spät verstellt wird, so dass der Schließzeitpunkt der Auslassventile nicht vor dem Öffnungszeitpunkt der Einlassventile liegt, wird erreicht, dass auch das Ansaugen während der Phase AGR gegen Umgebungsdruck (Abgasdruck) erfolgt. Dadurch treten äußerst geringe Ladungswechselverluste auf. Gleichzeitig erfolgt eine innere Abgasrückführung während der Phase AGR in den Zylinder. Während der Phase AN wird Luft bzw. Gemisch aus dem Einlasskanal in den Zylinder angesaugt.

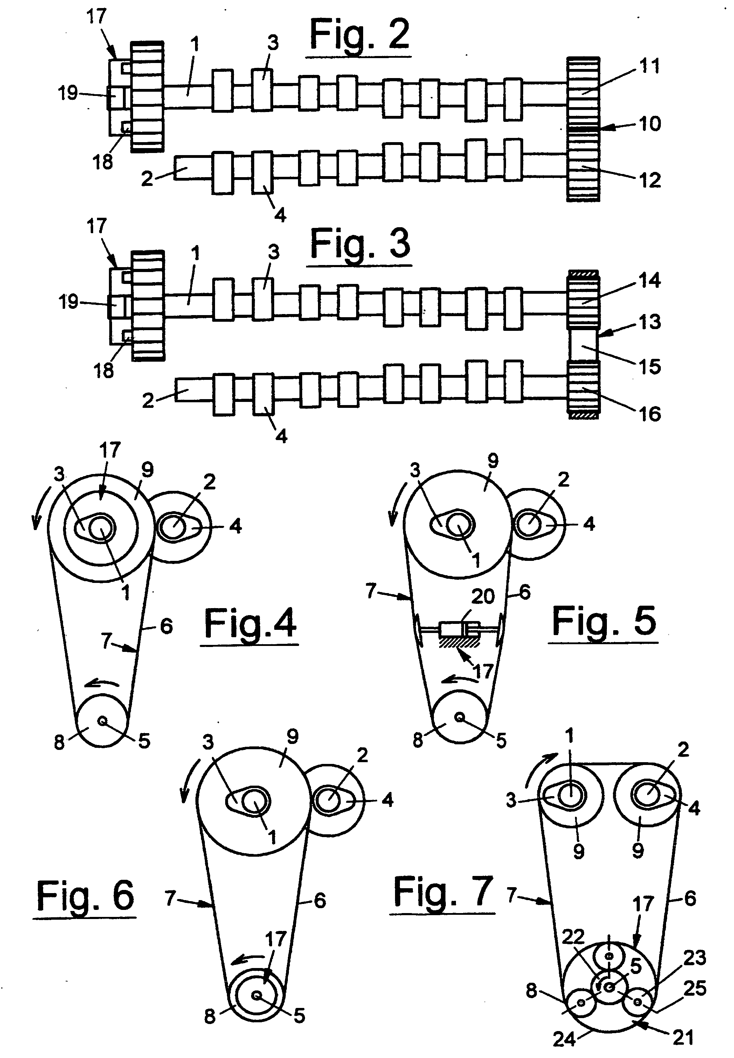

In den Fig. 2 bis 7 sind funktionsgleiche Teile mit gleichen Bezugszeichen versehen.

In einem nicht weiter dargestellten Zylinderkopf einer Brennkraftmaschine sind eine erste Nockenwelle 1 und eine zweite Nockenwelle 2 angeordnet. Die Nockenwellen dienen zum Antrieb von nicht weiter dargestellten Ein- und Auslassventilen in bekannter Weise. Die erste Nockenwelle 1 kann dabei die Einlassnocken 3 zur Betätigung der Einlassventile und die zweite Nockenwelle 2 die Auslassnocken 4 zur Betätigung der Auslassventile aufweisen. Es ist aber auch möglich, dass die erste Nockenwelle 1 die Auslassnocken 4 und die zweite Nockenwelle 2 die Einlassnocken 3 betätigt. Es ist auch denkbar, dass jede der beiden Nockenwellen 1, 2 sowohl Einlassnocken 3, als auch Auslassnocken 4 trägt.

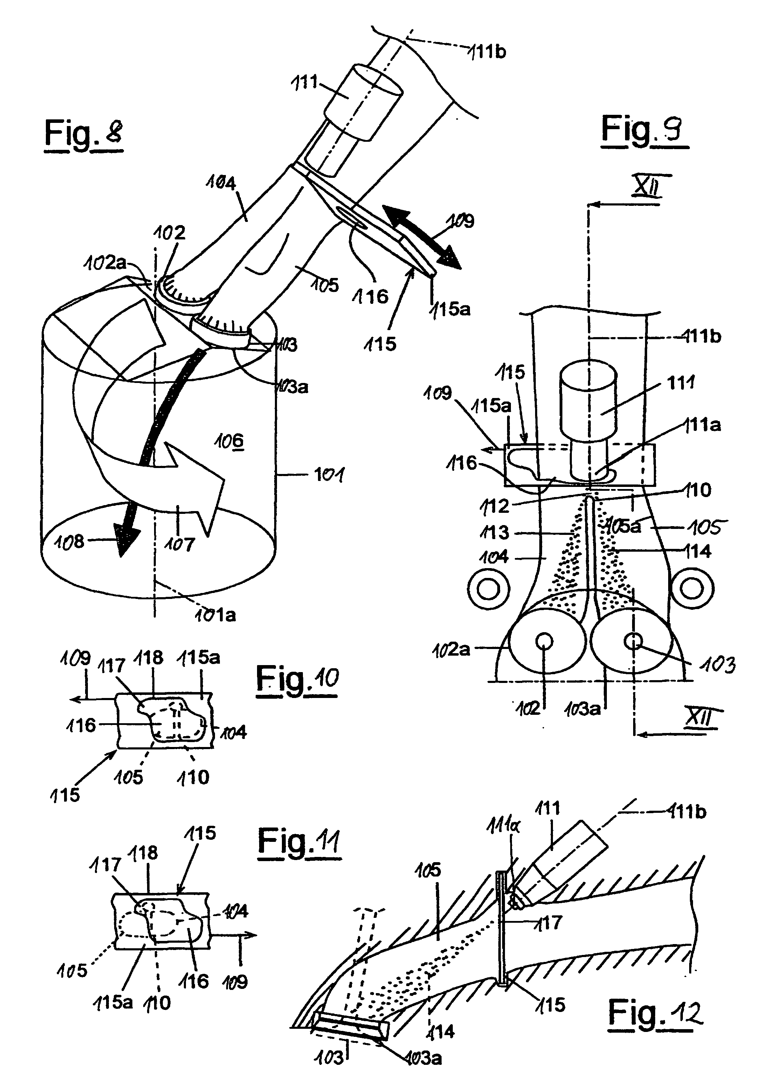

Der Antrieb der beiden Nockenwellen 1, 2 erfolgt über eine Kurbelwelle 5 mittels eines ein Zugmittel 6 aufweisenden Zugmittelgetriebes 7. Die Kurbelwelle 5 wirkt über ein Zugmittelantriebsrad 8 auf das Zugmittel 6 ein, welches über das Zugmittelabtriebsrad 9 die erste Nockenwelle 1 antreibt, wie beispielsweise aus Fig. 4 zu entnehmen ist. Bei der in Fig. 2 dargestellten Ausführung wird die zweite Nockenwelle 2 über ein Zahnradgetriebe 10 mit zwei gleich großen Zahnrädern 11, 12 von der ersten Nockenwelle 1 angetrieben. Bei der in Fig. 3 gezeigten Ausführung treibt die erste Nockenwelle 1 die zweite Nockenwelle 2 über ein zweites Zugmittelgetriebe 13 an. Das Zugmittelantriebsrad 14 der ersten Nockenwelle 1 wird dabei über das zweite Zugmittel 15 auf das mit der zweiten Nockenwelle 2 verbundene Zugmittelabtriebsrad 16 ein.

Um eine Phasenverstellung der ersten und zweiten Nockenwelle 1, 2 in Bezug auf die Kurbelwelle 5 zu bewirken, ist in den in den Fig. 2 und 3 dargestellten Ausführungsbeispielen zwischen dem Zugmittelgetriebe 7 und der ersten Nockenwelle 1 ein Phasenversteller 17 angeordnet. Mit Bezugszeichen 18 ist in den Fig. 2 und 3 die Verbindung zwischen dem Phasenversteller 17 und dem Zugmittelabtriebsrad 9, mit Bezugszeichen 19 die Verbindung zwischen dem Phasenversteller 17 und der ersten Nockenwelle 1 angedeutet. Der Phasenversteller 17 kann pneumatisch, hydraulisch, elektrisch oder mechanisch betätigbar sein. Er kann auch durch ein Planetengetriebe gebildet werden. Durch Betätigung des Phasenverstellers 17 wird bewirkt, dass sowohl die erste, als auch die zweite Nockenwelle 1, 2 relativ zur Kurbelwelle 5 verdreht wird, wodurch die Ventilhübe für Ein- und Auslass in der anhand der Fig. 1 beschriebenen Weise phasenverschoben werden.

Anstelle eines direkt auf die erste Nockenwelle 1 einwirkenden Phasenverstellers 17 kann dieser auch als beispielsweise hydraulische Spanneinrichtung 20 für das Zugmittel 6 ausgeführt sein, wie in Fig. 5 angedeutet ist.

Der Phasenversteller 17 kann aber auch zwischen Kurbelwelle 6 und Zugmittelantriebsrad 8 angeordnet sein, wodurch die Phasenlage des Zugmittelantriebsrades 8 gegenüber der Kurbelwelle 5 verschoben wird. Diese in Fig. 6 schematisch dargestellte Ausführungsvariante hat den Vorteil, dass Bauraum im Zylinderkopf eingespart werden kann.

Fig. 7 zeigt eine weitere Ausführungsvariante, bei der der Phasenversteller 17 als Planetengetriebe 21 ausgeführt ist, wobei die Kurbelwelle 5 über ein Sonnenrad 22 und Planetenräder 23 auf ein Hohlrad 24 einwirken. Das Sonnenrad 22 ist fest mit der Kurbelwelle 5, das Hohlrad 24 fest mit dem Zugmittelantriebsrad 8 verbunden. Durch Verdrehen der die Planetenräder 23 tragenden Stege 25 des Planetengetriebes 21 kann die Phasenlage zwischen dem Zugmittelantriebsrad 8 und der Kurbelwelle 5 verschoben werden. Auch bei dieser Ausführung kann Bauraum im Zylinderkopf eingespart werden. Ein weiterer Vorteil ist, dass das Zugmittelantriebsrad 8 unter Beibehaltung des bei einer Viertakt-Brennkraftmaschine erforderlichen Drehzahlverhältnisses von 2:1 zwischen Kurbelwelle 5 und Nockenwelle 1, 2 mit relativ großem Durchmesser ausgeführt sein kann, ohne dass der Durchmesser des entsprechenden Zugmittelantriebsrades 8 auf die erste Nockenwelle 1 übermäßig zunimmt. Das Zugmittel 6 wird dadurch wesentlich weniger beansprucht, was sich vorteilhaft auf dessen Lebensdauer auswirkt. Weiters bietet das zwischen Kurbelwelle 5 und Zugmittelantriebsrad 8 angeordnete Planetengetriebe 21 die Möglichkeit, über ein einziges Zugmittelgetriebe 7 sowohl die erste, als auch die zweite Nockenwelle 1, 2 direkt anzutreiben, wie in Fig. 7 dargestellt ist. Es kann somit auf ein zweites Zugmittelgetriebe 13, bzw. auf ein Zahnradgetriebe 10 zur Übertragung des Drehmomentes von der ersten Nockenwelle 1 auf die zweite Nockenwelle 2 verzichtet werden.

Bei der dargestellte Ausführung beträgt beispielsweise das Drehzahlverhältnis zwischen dem Hohlrad 24 und dem Sonnenrad 22 1:3. Dies ermöglicht eine sehr kompakte Bauweise. Aus der Forderung, dass bei einer Viertakt-Brennkraftmaschine das Drehzahlverhältnis zwischen Nockenwelle und Kurbelwelle 1:2 beträgt, ergibt sich ein Durchmesserverhältnis zwischen Hohlrad 24 und Zugmittelabtriebsrad 9 von 3:2. Die beiden Nockenwellen 1, 2 können somit relativ eng beieinander angeordnet werden.

Anstelle eines Planetengetriebes kann bei der Ausführung mit einem einzigen Zugmittelgetriebe gemäß Fig. 7 selbstverständlich auch ein anderer auf der Kurbelwelle sitzender Phasenversteller vorgesehen sein, welcher das Zugmittelantriebsrad bezüglich der Kurbelwelle phasenverschiebt. Ferner kann der Phasenversteller auch hier als Spanneinrichtung für das Zugmittel ausgebildet sein.

Die Zugmittel 6 und 15 können beispielsweise durch einen Zahnriemen oder eine Kette gebildet sein.

Die Brennkraftmaschine weist zumindest einen Zylinder 101 mit zwei Einlassventilen 102, 103 auf, wobei zum Einlassventil 102 ein erster Einlasskanal 104 und zum Einlassventil 103 ein zweiter Einlasskanal 105 führt. Erster und zweiter Einlasskanal 104, 105 münden über Einlassöffnungen 102a, 103a, welche durch die Einlassventile 102, 103 steuerbar sind, in einen Brennraum 106. Der erste Einlasskanal 104 ist als ungedrosselter, eine Tangentialströmung erzeugender Kanal ausgeführt, um im Brennraum 106 eine Drallströmung 107 um die Zylinderachse 101a zu generieren. Der zweite Einlasskanal 105 ist im Ausführungsbeispiel als Neutralkanal ausgebildet und bildet eine drallneutrale Strömung 108 im Brennraum 106.

Der erste Einlasskanal 104 kann dabei durch einen Tangentialkanal gebildet sein. Es ist aber auch möglich, den ersten Einlasskanal 104 strömungsneutral auszubilden und die Tangentialströmung im Brennraum durch einen eigenen Tangentialnebenkanal, welcher stromaufwärts des Einlassventils 102 in den ersten Einlasskanal 104 einmündet, zu generieren.

Im Bereich einer Kanaltrennwand 110 zwischen dem ersten Einlasskanal 104 und dem zweiten Einlasskanal 105 ist ein Einspritzventil 111 angeordnet, welches über eine definierte Öffnung 112 in der Kanaltrennwand 110 Kraftstoff 113, 114 in den ersten Einlasskanal 104 und den zweiten Einlasskanal 105 einspritzt. Im Bereich der Öffnung 112 ist stromabwärts der Mündung 111a des Einspritzventils 111 eine Drosseleinrichtung 115 angeordnet, welche im geöffneten Zustand den Durchfluss durch den zweiten Einlasskanal 105 vollständig freigibt. Im geschlossenen Zustand dagegen wird der zweite Einlasskanal 105 bis auf eine definierte Leckageöffnung 117 geschlossen. Die Leckageöffnung 117 ist dabei im Bereich der Mündung 111a des Einspritzventils 111 hinsichtlich der Lage und Größe so angeordnet, dass der in Richtung der Einlassöffnung 103a gelenkte Strahl des Kraftstoffes 114 die Leckageöffnung 117 ungehindert passieren kann.

Dadurch, dass die Drosseleinrichtung 115 unmittelbar bei der Mündung 111a des Einspritzventils 111 angeordnet ist, ist für die Leckageströmung kein eigener Leckageströmungsweg erforderlich. Trotzdem wird eine Ablenkung des Kraftstoffstrahles 114 in Richtung der Kanalwände 105a des zweiten Einlasskanals 105 wirksam vermieden. Zusätzlich ergibt sich dadurch, dass die Drosseleinrichtung 115 zumindest teilweise stromabwärts der Öffnung 112 in der Trennwand 110 liegt, der Vorteil, dass ein unerwünschtes Querströmen zwischen den beiden Einlasskanälen 104, 105 wirksam vermieden wird.

Die Fig. 8 bis 11 zeigen eine Ausführungsvariante, bei der die Drosseleinrichtung 115 durch einen quer zu den Einlasskanälen 104,105 entsprechend den Pfeilen 109 bewegbaren Schieber 115a gebildet ist. Der Schieber 115a weist eine Schieberöffnung 116 auf, welche von der Form und Größe so ausgebildet ist, dass im geöffneten Zustand beide Einlasskanäle 104, 105 vollständig freigegeben sind, wie aus Fig. 10 ersichtlich ist. Im geschlossenen Zustand wird hingegen der zweite Einlasskanal 105 bis auf eine definierte Leckageöffnung 117 geschlossen. Die Leckageöffnung 117 ist durch eine Ausbuchtung 118 in der Schieberöffnung 116 gebildet.

Anstelle als Schieber 115a kann die Drosseleinrichtung 115 auch als Drosselklappe ausgebildet sein.

Durch das erfindungsgemäße Verfahren ist ein entdrosselter Betrieb mit äußerst geringem konstruktivem und steuertechnischem Aufwand möglich. Daher ergeben sich äußerst geringe Ladungswechselverluste und ein günstiger Kraftstoffverbrauch. Da zur Steuerzeitverstellung nur eine einzige, für Ein- und Auslassventile gemeinsame konventionelle Nockenwellen-Phasenverstelleinrichtung verwendet werden kann, ist im Vergleich zu einem vollvariablem Ventilhub und im Vergleich zur Steuerzeitverstellung bei DOHC-Motoren ein wesentlich geringerer Aufwand erforderlich.

## Patentansprüche

1. Verfahren zum Betreiben einer fremdgezündeten Brennkraftmaschine, welche zumindest einen Zylinderkopf mit einer ersten und einer zweiten Nockenwelle (1, 2) zur Betätigung von im Zylinderkopf angeordneten Ein- und Auslassventilen aufweist, wobei zumindest eine Nockenwelle (1, 2) über ein Zugmittelgetriebe (7) von einer Kurbelwelle (5) angetrieben wird, und welche pro Zylinder (101) zumindest zwei bis zu den Einassöffnungen (102a, 103a) in den Brennraum (106) getrennte Einlasskanäle (104, 105) aufweist, **dadurch gekennzeichnet, dass** bei Teillast einer der beiden Einlasskanäle (105) hydraulisch stromabwärts eines Kraftstoff in beide Einlasskanäle einspritzenden Einspritzventils durch eine Drosseleinrichtung (115) mit vordefinierter Leckageöffnung (117) geschlossen und der andere Einlasskanal (104) geöffnet wird oder bleibt und die beiden phasengleich umlaufenden Nockenwellen (1, 2) synchron bezüglich der Kurbelwelle (5) phasenverstellt werden, so dass sowohl die Einlasssteuerzeit, als auch die Auslasssteuerzeit um einen Kurbelwinkel (KW) von etwa 30° bis 100°, vorzugsweise etwa 40° bis 80°, nach Spät verschoben wird.

2. Verfahren nach Anspruch 1, **dadurch gekennzeichnet, dass** bei Spätverstellung der Einlasssteuerzeit der Einlassschluss bei etwa 80° bis 150°, vorzugsweise bei etwa 90° bis 140°, nach dem auf den Ladungswechsel folgenden unteren Totpunkt erfolgt.

3. Verfahren nach Anspruch 1 oder 2, **dadurch gekennzeichnet, dass** die Brennkraftmaschine entdrosselt betrieben wird.

4. Verfahren nach einem der Ansprüche 1 bis 3, **dadurch gekennzeichnet, dass** die Phasenverstellung durch Verdrehen einer Nockenwelle (1) in Bezug auf ein Abtriebsrad (9) des Zugmittelgetriebes (7) erfolgt.

5. Verfahren nach einem der Ansprüche 1 bis 3, **dadurch gekennzeichnet, dass** die Phasenverstellung durch Verdrehen eines Zugmittelantriebsrades (8) des Zugmittelgetriebes (7) in Bezug auf die Kurbelwelle (5) erfolgt.

6. Verfahren nach einem der Ansprüche 1 bis 5, **dadurch gekennzeichnet, dass** die Phasenverstellung durch Verändern der Zugmittelspannung des Zugmittels (7) erfolgt.

7. Viertakt-Brennkraftmaschine mit Fremdzündung, mit zumindest einem Zylinderkopf mit einer ersten und einer zweiten Nockenwelle (1, 2) zur Betätigung von im Zylinderkopf angeordneten Ein- und Auslassventilen, wobei zumindest eine Nockenwelle (1, 2) über ein Zugmittelgetriebe (7) von einer Kurbelwelle (5) angetrieben ist, **dadurch gekennzeichnet, dass** die Steuerzeit zumindest einer Nockenwelle (1, 2) bezüglich der Kurbelwelle (5) phasenverstellbar ist, und dass beide Nockenwellen (1, 2) phasengleich miteinander gekoppelt und synchron über einen einzigen Phasenversteller (17) phasenverstellbar gegenüber der Kurbelwelle (5) sind, wobei der Phasenversteller (17) im Antriebsstrang zwischen Kurbelwelle (5) und der Nockenwelle (1, 2) angeordnet ist, und dass im Zylinderkopf zumindest zwei bis zu den Einlassöffnungen (102a, 103a) in den Brennraum (106) getrennte Einlasskanäle (104, 105) vorgesehen sind, wobei ein Einlasskanal (105) durch eine eine definierte Leckageöffnung (117) aufweisende Drosseleinrichtung (115) absperrbar ist, und wobei die Drosseteinrichtung (115) hydraulisch stromabwärts eines Kraftstoff in beide Einlasskanäle (104, 105) einspritzenden Einspritzventils (111) angeordnet ist.

8. Brennkraftmaschine nach Anspruch 7, wobei die beiden Nockenwelle (1, 2) über ein zweites Zugmittelgetriebe (13) miteinander verbunden sind, **dadurch gekennzeichnet, dass** der Phasenversteller (17) im Bereich zwischen einem Zugmittelabtriebsrad (9) und der ersten Nockenwelle (1) angeordnet ist.

9. Brennkraftmaschine nach Anspruch 7, **dadurch gekennzeichnet, dass** der Phasenversteller (17) im Bereich zwischen der Kurbelwelle (5) und dem Zugmittelantriebsrad (8) angeordnet ist.

10. Brennkraftmaschine nach einem der Ansprüche 7 bis 9, **dadurch gekennzeichnet, dass** der Phasenversteller (17) als Planetengetriebe (21) ausgebildet ist.

11. Brennkraftmaschine nach Anspruch 7, **dadurch gekennzeichnet, dass** der Phasenversteller (17) als Spanneinrichtung (20) für das Zugmittel (6) des Zugmittelgetriebes (7) ausgebildet ist.

12. Brennkraftmaschine nach einem der Ansprüche 9 bis 11, **dadurch gekennzeichnet, dass** zum Antrieb der beiden Nockenwellen (1, 2) durch die Kurbelwelle (5) nur ein einziges Zugmittelgetriebe (7) vorgesehen ist, wobei die beiden Nockenwellen (1, 2) durch das selbe Zugmittel (6) des Zugmittelgetriebes (7) angetrieben sind.

13. Brennkraftmaschine nach einem der Ansprüche 7 bis 11, **dadurch gekennzeichnet, dass** die beiden Nockenwellen (1, 2) durch ein zweites Zugmittelgetriebe (13) oder ein Zahnradgetriebe (10) miteinander verbunden sind.

## Claims

1. Method of operating an internal-combustion spark-ignition engine, which is provided with at least one cylinder head with a first and second camshaft 1, 2 for operating inlet and exhaust valves located in the cylinder head, at least one camshaft 1, 2 being driven by a crankshaft 5 via a drive belt mechanism 7, and which includes at least two separate inlet passages 104, 105 per cylinder 101 leading up to the inlets 102a, 103a opening into the combustion chamber 106, **characterized in that** under partial load conditions one of the two inlet passages 105 will be closed by a throttle element 115 with a predefined leakage opening 117, which is situated downstream of an injection valve injecting fuel into both inlet passages, while the other inlet passage 104 will be opened or remain open, and the two camshafts 1, 2, which are turning phase-identically, will be phase-adjusted synchronously relative to the crankshaft 5, so that both inlet and exhaust timing will be retarded by a crank angle KW of 30° to 100°, and preferably by 40° to 80°.

2. Method according to claim 1, **characterized in that** upon a retarding of the inlet timing the inlet valve will close at about 80° to 150°, and preferably at about 90° to 140° after bottom dead centre following charge exchange.

3. Method according to claim 1 or 2, **characterized in that** the internal combustion engine is operated unthrottled.

4. Method according to any of claims 1 to 3, **characterized in that** phase adjustment is achieved by rotating a camshaft 1 relative to a driven gear 9 of the drive belt mechanism 7.

5. Method according to any of claims 1 to 3, **characterized in that** phase adjustment is achieved by rotating a driving gear 8 of the drive belt mechanism 7 relative to the crankshaft 5.

6. Method according to any of claims 1 to 5, **characterized in that** phase adjustment is achieved by changing the belt tension of the drive belt mechanism 7.

7. Four-stroke internal combustion engine with spark ignition, which is provided with at least one cylinder head with a first and second camshaft 1, 2 for operating inlet and exhaust valves located in the cylinder head, at least one camshaft 1, 2 being driven by a crankshaft 5 via a drive belt mechanism 7, **characterized in that** the timing of at least one camshaft 1, 2 may be phase-adjusted relative to the crankshaft 5, and that the two camshafts 1, 2 are coupled so as to be phase-identical and may be synchronously phase-adjusted relative to the crankshaft 5 by means of a single phase-adjusting element 17, said phase-adjusting element 17 being positioned in the drive train between the crankshaft 5 and the camshaft 1, 2, and that at least two separate inlet passages 104, 105 are provided in the cylinder head, which lead up to the inlets 102a, 103a opening into the combustion chamber 106, where one inlet passage 105 can be blocked by a throttle element 115 provided with a defined leakage opening 117, and where the throttle element 115 is positioned downstream of an injection valve 111 for fuel injection into both inlet passages 104, 105.

8. Internal combustion engine according to claim 7, where the two camshafts 1, 2 are coupled via a second drive belt mechanism 13, **characterized in that** the phase adjusting element 17 is situated in the area between a driven gear 9 of the belt mechanism and the first camshaft 1.

9. Internal combustion engine according to claim 7, **characterized in that** the phase adjusting element 17 is situated in the area between the crankshaft 5 and the driving gear 8 of the belt mechanism.

10. Internal combustion engine according to any of claims 7 to 9, **characterized in that** the phase adjusting element 17 is configured as a planetary gear set 21.

11. Internal combustion engine according to claim 7, **characterized in that** the phase adjusting element 17 is configured as a tensioner 20 for the drive belt 6 of the drive belt mechanism 7.

12. Internal combustion engine according to any of claims 9 to 11, **characterized in that** for driving the two camshafts 1, 2 by the crankshaft 5 one single drive belt mechanism 7 is provided, where the two camshafts 1, 2 are driven by one and the same drive belt 6 of the drive belt mechanism 7.

13. Internal combustion engine according to any of claims 7 to 11, **characterized in that** the two camshafts 1, 2 are connected to each other by a second drive belt mechanism 13 or a gear mechanism 10.

## Revendications

1. Procédé de fonctionnement d'un moteur à combustion interne à allumage commandé, qui présente au moins une culasse dotée d'un premier et d'un second arbre à cames (1, 2) pour l'actionnement de soupapes d'admission et d'échappement disposées dans la culasse, au moins un arbre à cames (1, 2) étant entraîné, par le biais d'une transmission par élément flexible (7), par un vilebrequin (5), et qui présente pour chaque cylindre (101) au moins deux canaux d'admission (104, 105) séparés menant jusqu'aux orifices d'admission (102a, 103a) dans la chambre de combustion (106),
**caractérisé en ce qu'**
en charge partielle, l'un des deux canaux d'admission (105) est fermé avec une ouverture de fuite (117) prédéfinie par un dispositif d'étranglement (115) hydrauliquement en aval d'une soupape d'injection injectant du carburant dans les deux canaux d'admission, et l'autre canal d'admission (104) est ou reste ouvert et les deux arbres à cames (1, 2) tournant avec la même phase sont réglés en termes de phase de façon synchronisée par rapport au vilebrequin (5), de telle sorte qu'à la fois le temps de commande d'admission et le temps de commande d'échappement sont retardés d'un angle de vilebrequin (KW) d'environ 30° à 100°, de préférence d'environ 40° à 80°.

2. Procédé selon la revendication 1,
**caractérisé en ce que**
lors du retardement du temps de commande d'admission, la fin de l'admission s'effectue à environ 80° à 150°, de préférence à environ 90° à 140° après le point mort bas suivant le changement de charge.

3. Procédé selon la revendication 1 ou 2,
**caractérisé en ce que**
le moteur à combustion interne fonctionne sans étranglement.

4. Procédé selon l'une quelconque des revendications 1 à 3,
**caractérisé en ce que**
le réglage de phase s'effectue par une rotation d'un arbre à cames (1) par rapport à une roue entraînée (9) de la transmission par élément flexible (7).

5. Procédé selon l'une quelconque des revendications 1 à 3,
**caractérisé en ce que**
le réglage de phase s'effectue par rotation d'une roue d'entraînement (8) de la transmission par élément flexible (7) par rapport au vilebrequin (5).

6. Procédé selon l'une quelconque des revendications 1 à 5,
**caractérisé en ce que**
le réglage de phase s'effectue par une modification de la tension de l'élément flexible (7).

7. Moteur à combustion interne à quatre temps à allumage commandé, comportant au moins une culasse dotée d'un premier et d'un second arbre à cames (1, 2) pour l'actionnement de soupapes d'admission et d'echappement disposées dans la culasse, au moins un arbre à cames (1, 2) étant entraîné, par le biais d'une transmission par élément flexible (7), par un vilebrequin (5),
**caractérisé en ce que**
le temps de commande d'au moins un arbre à cames (1, 2) par rapport au vilebrequin (5) est réglable en termes de phase, et les deux arbres à cames (1, 2) sont couplés entre eux avec la même phase et réglables en termes de phase de façon synchronisée par le biais d'un unique dispositif de réglage de phase (17) par rapport au vilebrequin (5), le dispositif de réglage de phase ( 17) étant disposé dans la chaîne cinématique entre le vilebrequin (5) et l'arbre à cames (1, 2), et il est prévu dans la culasse au moins deux canaux d'admission (104, 105) séparés menant jusqu'aux orifices d'admission (102a, 103a) dans la chambre de combustion (106), un canal d'admission (105) pouvant être fermé par un dispositif d'étranglement (115) présentant une ouverture de fuite (117) définie, et le dispositif d'étranglement (115) étant disposé hydrauliquement en aval d'une soupape d'injection (111) injectant du carburant dans les deux canaux d'admission (104, 105).

8. Moteur à combustion interne selon la revendication 7,
dans lequel les deux arbres à cames (1, 2) sont reliés entre eux par le biais d'une seconde transmission par élément flexible (13),
**caractérisé en ce que**
le dispositif de réglage de phase (17) est disposé dans la zone entre une roue entraînée de la transmission par élément flexible (9) et le premier arbre à cames (1).

9. Moteur à combustion interne selon la revendication 7,
**caractérisé en ce que**
le dispositif de réglage de phase (17) est disposé dans la zone entre le vilebrequin (5) et la roue d'entraînement de la transmission par élément flexible (8).

10. Moteur à combustion interne selon l'une quelconque des revendications 7 à 9,
**caractérisé en ce que**
le dispositif de réglage de phase (17) est configuré sous la forme d'un engrenage planétaire (21).

11. Moteur à combustion interne selon la revendication 7,
**caractérisé en ce que**
le dispositif de réglage de phase (17) est configuré sous la forme d'un dispositif de tension (20) pour l'élément flexible (6) de la transmission par élément flexible (7).

12. Moteur à combustion interne selon l'une quelconque des revendications 9 à 11,
**caractérisé en ce que**
pour l'entraînement des deux arbres à cames (1, 2) par le vilebrequin (5), il est prévu une unique transmission par élément flexible (7), les deux arbres à cames (1, 2) étant entraînés par le même élément flexible (6) de la transmission par élément flexible (7).

13. Moteur à combustion interne selon l'une quelconque des revendications 7 à 11,
**caractérisé en ce que**
les deux arbres à cames (1, 2) sont reliés entre eux par le biais d'une seconde transmission par élément flexible (13) ou par le biais d'une transmission par engrenage (10).
